# FASCICULE DE BREVET EUROPEEN

(11) **EP 0 913 903 B1**
(45) Date de publication et mention de la délivrance du brevet: **28.11.2001**
(21) Numéro de dépôt: 98402521.3
(22) Date de dépôt: 12.10.1998
(51) Int. Cl.: H02G 15/068, H02G 15/06

(54) **Dispositif d'extrémité extérieure d'un câble d'énergie**
Für im Freien bestimmtes Energiekabelendverschluss
Outdoor power cable end

(30) Priorité: 30.10.1997 FR 9713628
(43) Date de publication de la demande: 06.05.1999
(73) Titulaire: Nexans, 75008 Paris (FR)
(72) Inventeur: Darcy, André, 62100 Calais (FR); François, Daniel, 62340 Andres (FR); Gahungu, François, 62100 Calais (FR); Mirebeau, Pierre, 91140 Villebon s/Yvette (FR)
(74) Mandataire: Feray, Valérie

(56) Documents cités:
- EP-A- 0 007 584
- US-A- 3 808 352
- US-A- 3 860 741

## Description

La présente invention se rapporte aux dispositifs d'extrémité extérieure de câbles d'énergie moyennne, haute ou très haute tension, comportant un ensemble de contrôle de champ électrique et de protection extérieure monté sur la partie terminale dénudée du câble d'énergie.

Un câble d'énergie haute ou très haute tension comporte une âme conductrice, une isolation sur l'âme, un écran semi-conducteur sur l'isolation, un écran conducteur sur le précédent et une gaine de protection extérieure. L'écran semi-conducteur peut être constitué d'une ou de plusieurs couches rubanées ou non et superposées. L'écran conducteur peut être contrecollé ou non à la gaine. La partie terminale du câble est dénudée successivement, pour la mise à nu et l'accès à ses différentes parties constitutives et la mise en place du dispositif d'extrémité sur le câble et d'une cosse ou d'un embout terminal de raccordement sur l'âme du câble.

Le document US-A-3 860 741 divulgue un manchon déflecteur monté sur la portion terminale de l'écran conducteur dénudé du câble et une partie de l'isolation dénudée du câble. Il est réalisé en matériau élastomérique isolant, en particulier EPDM, dans lequel est prévu un cône déflecteur en matériau élastomère conducteur. Le cône déflecteur entoure l'extrémité de l'écran conducteur. Il est relié à cet écran et mis à la terre. Il s'évase depuis l'extrémité de cet écran conducteur en étant au moins partiellement noyé dans l'élastomère isolant et s'étendant aussi autour de l'isolation dénudée du câble.

Le cône déflecteur peut en variante être en matériau élastomère semi-conducteur. Il entoure alors l'extrémité de l'écran semi-conducteur du câble et est relié à cet écran, l'écran conducteur du câble étant par ailleurs relié à la terre.

D'autres méthodes sont également connues pour contrôler le champ électrique à l'arrêt de l'écran conducteur ou semi-conducteur sur la partie terminale dénudée du câble. Elles utilisent en particulier des matériaux résistifs et/ou capacitifs à caractéristiques électriques linéaires ou non linéaires ou des matériaux à haute permittivité électrique.

Le document GB-A-1 526 397 divulgue un tel manchon de protection comportant une couche intérieure de gradation de tension et recouvrant la partie terminale dénudée du câble en s'étendant jusqu'à la pièce terminale de connexion sur l'âme du câble.

En utilisation extérieure, ainsi que connu par le document US-A-3 808 352, illustré dans la figure 1 et décrit plus en détail ci-après, les dispositifs d'extrémité de câble d'énergie comportent aussi en général un certain nombre de jupes isolantes en matériau élastomère, qui est associé au manchon de contrôle de champ et de protection et s'étend jusqu'à la pièce terminale de raccordement montée sur l'âme du câble. La forme et le nombre de jupes sont prévus pour allonger les lignes de fuite. La matière de ces jupes est en particulier l'EPDM qui présente une bonne résistance aux cheminements du courant de fuite.

On peut aussi prévoir un collier métallique de mise à la terre, monté autour du manchon de contrôle de champ et de protection et destiné à collecter le courant de fuite et à le drainer à la terre.

On connaît également par le document EP-A-0 007 584, une extrémité de câble comportant un manchon semi-conducteur d'étanchéité entre l'isolation du câble et la cosse conductrice terminale fixée sur l'âme du câble, ce manchon présentant un anneau pour détourner les lignes de fuite.

On constate cependant que les telles mesures connues ne sont pas toujours suffisantes pour éviter la présence de sillon ou chemins préférentiels de courant de fuite à la surface du matériau élastomère, qui sont dûs à une densité non homogène du courant de fuite vers le collier lorsque celui-ci est présent et peuvent conduire à des fissurations importantes et même complètes du matériau élastomère.

La présente invention a pour but d'éviter ou tout au moins de minimiser les problèmes dus au courant de fuite.

Elle a pour objet un dispositif d'extrémité extérieure de câble d'énergie moyenne, haute ou très haute tension,ledit câble comportant une âme conductrice centrale, une isolation sur l'âme, un écran semi-conducteur sur l'isolation, un écran conducteur sur l'écran semi-conducteur et une gaine de protection extérieure et ayant une portion terminale dénudée successivement, le dispositif comportant un ensemble de contrôle de champ électrique et de protection extérieure, qui comprend au moins un élément tubulaire isolant monté sur l'isolation dénudée du câble et un manchon déflecteur de champ électrique reçu sur l'écran semi-conducteur dénudé dudit câble, et un collecteur de courant de fuite associé audit ensemble et relié à la terre, caractérisé en ce que ledit collecteur de courant est réalisé en forme de gouttière annulaire, montée sur une section dite arrière dudit câble par rapport à l'âme dénudée dudit câble et audit ensemble de contrôle de champ et de protection extérieure, en étant tournée vers ce dernier et étant électriquement reliée audit déflecteur de champ, et en ce que ledit dispositif comporte un moyen de continuité de protection extérieure, prévu entre ledit ensemble et ledit collecteur de courant de fuite et reçu intérieurement dans ladite gouttière.

Avantageusement :
- ledit collecteur de courant de fuite a au moins sa paroi intérieure réalisée en matériau semi-conducteur ou à caractéristique électrique linéaire ou non.
- une gaine semi-conductrice s'étend entre ladite gouttière et ledit ensemble de contrôle de champ et de protection extérieure et sous leurs portions terminales en vis-à-vis et est recouverte d'un tube isolant de protection constituant ledit moyen de continuité de la protection extérieure.
- ladite gouttière fait partie intégrante dudit ensemble de contrôle de champ et de protection extérieure.

Les caractéristiques et avantages de la présente invention ressortiront de la description d'un mode préféré de réalisation illustré dans les dessins ci-annexés. Dans ces dessins :
- la figure 1 est une vue en demi-axiale et en élévation d'un dispositif d'extrémité extérieure de type connu,
- la figure 2 est une vue partielle en coupe d'un dispositif d'extrémité extérieure selon la présente invention.

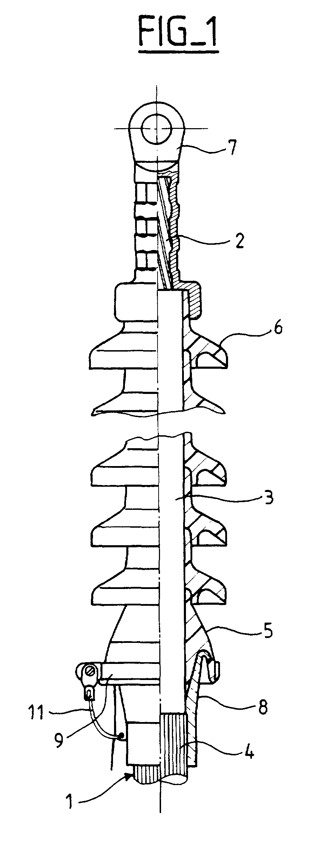

En se référant à la figure 1, on a illustré un dispositif d'extrémité extérieure, de type connu tel qu'indiqué ci-avant, monté sur la portion terminale dénudée d'un câble d'énergie 1. Ce câble comporte une âme conductrice 2, une isolation 3 sur l'âme, un écran semi-conducteur 4 sur l'isolation. Il comporte aussi un écran conducteur sur l'écran semi-conducteur et une gaine extérieure sur l'écran conducteur, qui ne sont pas visibles dans cette figure.

Le dispositif d'extrémité extérieure comporte un manchon déflecteur de champ électrique 5 et une série de jupes isolantes 6 montées sur la partie terminale dénudée du câble. Une pièce terminale de raccordement 7 est montée sur l'âme conductrice dénudée du câble. Le manchon déflecteur 5 est enfilé sur l'extrémité de l'écran semi-conducteur dénudé du câble. Les jupes isolantes 6 sont enfilées sur l'isolation dénudée du câble. Elles sont emboîtées les unes dans les autres et sur l'extrémité avant du manchon déflecteur en assurant l'étanchéité du dispositif d'extrémité. Elles peuvent en variante former avec ou sans le manchon déflecteur une protection extérieure d'un seul tenant. Elles sont en matériau élastomère, en particulier en EPDM.

Le manchon déflecteur est également en matériau élastomère isolant, en particulier en EPDM, qui est pourvu d'un cône déflecteur 8 en élastomère semi-conducteur dans sa partie arrière reçue sur l'écran semi-conducteur dénudé du câble. Le cône déflecteur est relié à cet écran semi-conducteur. Il s'évase dans le matériau élastomère isolant du manchon déflecteur, en s'étendant ainsi autour de l'isolation du câble.

Un collier métallique 9 est monté autour du manchon déflecteur. Il est pourvu d'une liaison 11 le reliant au cône déflecteur et à la terre. Il collecte le courant de fuite, alors drainé à la terre.

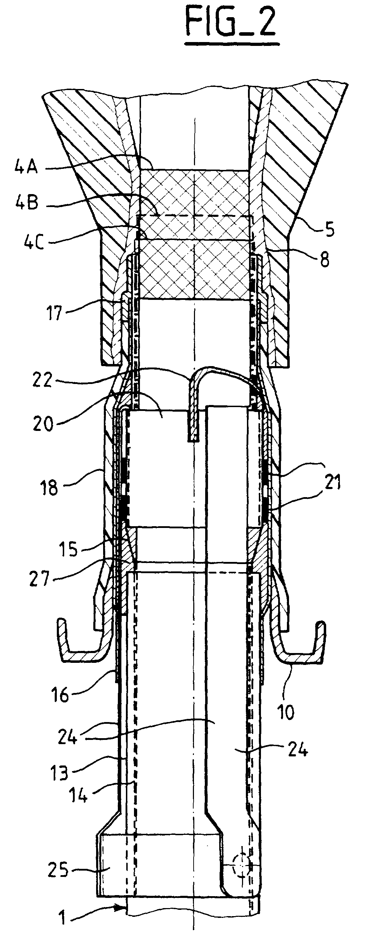

La figure 2 montre le perfectionnement apporté selon l'invention à un dispositif d'extrémité extérieure de câble d'énergie. Ce perfectionnement porte plus particulièrement sur le moyen collecteur de courant de fuite du dispositif d'extrémité extérieure, dont l'ensemble de contrôle de champ et de protection extérieure est de type général connu, qui dans cette réalisation est tel que celui de la figure 1.

Cette figure 2 montre en conséquence la seule partie arrière du dispositif d'extrémité extérieure en place sur le câble 1, qui est par ailleurs analogue au dispositif de la figure 1. On voit partiellement le manchon déflecteur désigné sous la référence 5 précitée, qui est pourvu de son cône déflecteur également désigné sous la référence précitée 8. On a représenté l'écran semi-conducteur du câble 1 formé de plusieurs couches superposées notées 4A, 4B et 4C, qui sont successivement dénudées. La partie arrière du manchon déflecteur 5 est enfilée sur les différentes couches d'écran semi-conducteur, la partie arrière du cône déflecteur leur étant alors directement reliée. On a aussi représenté la gaine de protection extérieure 13 du câble 1 et l'écran conducteur 14 de ce câble 1. La partie terminale de cet écran conducteur 14 est découpée en languettes 15 pour son raccordement à la terre par des conducteurs 24.

Le dispositif d'extrémité est pourvu selon l'invention d'un collecteur spécifique adapté 10 de courant de fuite.

Le collecteur de courant de fuite 10 est monté sur la partie terminale de la gaine de protection extérieure 13 du câble. Il a la forme d'une gouttière annulaire autour de celle-ci. Il est entièrement réalisé ou a sa seule paroi intérieure réalisée en matériau synthétique résistant semi-conducteur, en particulier en matière silicone semi-conductrice ou en EPDM semi-conducteur, ou peut être totalement ou sur sa seule paroi intérieure réalisé en matériau résistif à caractéristique électrique linéaire ou non. Cette gouttière est tournée vers le bout du câble. Sa paroi extérieure est légèrement évasée. Elle peut être en matériau isolant.

Ce collecteur de courant est relié aux couches d'écran semi-conducteur et au cône déflecteur 8 par une gaine semi-conductrice 16 montée sur le câble. Cette gaine 16 s'étend sur l'extrémité de la gaine de protection extérieure 13 et depuis celle-ci jusqu'à l'écran semi-conducteur 4C du câble et les enserre fermement. Elle reçoit l'extrémité arrière du manchon déflecteur et donc du cône déflecteur 8 de celui-ci sur sa partie avant et le collecteur terminal de courant de fuite 10 sur sa partie sensiblement arrière, en assurant une continuité de liaison entre-eux et la mise à la terre du collecteur 10. Un tube de protection 18 est monté sur la gaine semi-conductrice en l'enserrant fermement. Il reçoit l'extrémité arrière du manchon déflecteur 6. A l'opposé, il assure le maintien du collecteur 10, en étant reçu sur la paroi intérieure de celui-ci. Ce tube en matériau isolant très résistant est par exemple prévu en silicone, ou en EPDM. Il assure la continuité de protection extérieure entre le manchon déflecteur 5 et la gouttière 10, jusque sur une partie de la hauteur de la paroi intérieure de cette gouttière.

La gaine 16 et le tube 18 sont avantageusement l'un et l'autre des pièces rétractables pour l'obtention d'un bon serrage en place. Ce sont des pièces thermorétractables ou des pièces mécanico-rétractables à froid.

Un bourrage semi-conducteur 17 est placé autour de l'extrémité avant de la gaine semi-conductrice 16, celle-ci étant prévue légèrement saillante sous le tube 18.

Le raccordement à la terre 15 de l'écran conducteur 14 du câble et du collecteur 10 est réalisé par les conducteurs 24. A cet effet, une bague métallique 20 est montée sur l'écran semi-conducteur 4C. Des colliers de serrage maintiennent les languettes 15 de l'écran 14 contre cette bague 20. Une tresse conductrice 22 reliée à la bague 20 et retenue sous les colliers assure une reprise de masse entre la bague et les colliers de serrage 21.

Les conducteurs 24 sont des pattes 24 soudées sur l'extrémité avant de la bague 20, qui s'étendent le long de cette bague 20 et au-delà du collecteur de courant 10, jusque sur la gaine extérieure 13 du câble. Ces pattes sont reliées les unes aux autres par une bague 25 de mise à la terre, montée sur le câble gainé à l'arrière du collecteur de courant de fuite 10.

Des bourrages d'étanchéité 27 sont réalisés entre la gaine semi-conductrice 16, la partie terminale de la gaine du câble et la partie avant de la bague 20.

En variante donnée par rapport à la figure 2, la gaine 16, le tube 18 de continuité de la protection extérieure et la gouttière 10 peuvent faire partie intégrante du manchon déflecteur à cône déflecteur intégré ou de tout autre agencement connu de contrôle de champ et de protection extérieure.

Le collecteur de courant de fuite 10 faisant gouttière assure ainsi le stockage d'eau qu'il reçoit. Il répartit uniformément le courant de fuite et fait varier le niveau de collection du courant de fuite avec le niveau d'eau qui est reçue et stockée dans la gouttière et dans laquelle se trouve noyée la partie arrière de la protection extérieure. Il retarde en conséquence les traces de cheminement du courant de fuite sur la partie arrière de la protection extérieure et l'apparition de fissurations résultantes. L'efficacité de ce collecteur de courant de fuite se trouve renforcée en présence d'eau dans la gouttière, c'est-à-dire précisément quand l'extrémité de câble est soumise notamment à la pluie ou reste humide et donc quand les courants de fuite sont les plus importants.

Les dispositifs d'extrémité extérieure équipée d'une telle gouttière de collection de courant de fuite, selon l'invention, ont ladite gouttière disposée en position horizontale. Ils conviennent particulièrement aux câbles moyenne, haute ou très haute tension et sont utilisables dans des conditions de pollution très importante.

## Revendications

1. Dispositif d'extrémité extérieure de câble d'énergie moyenne, haute ou très haute tension, ledit câble (1) comportant une âme conductrice centrale (2), une isolation (3) sur l'âme, un écran semi-conducteur (4) sur l'isolation, un écran conducteur (14) sur l'écran semi-conducteur et une gaine (13) de protection extérieure et ayant une portion terminale dénudée successivement, le dispositif comportant un ensemble de contrôle de champ électrique et de protection extérieure (8, 5, 6), qui comprend au moins un élément tubulaire isolant monté sur l'isolation dénudée du câble et un manchon déflecteur de champ électrique (8) reçu sur l'écran semi-conducteur dénudé dudit câble, et un collecteur de courant de fuite (10) associé audit ensemble et relié à la terre, **caractérisé en ce que** ledit collecteur de courant (10) est réalisé en forme de gouttière annulaire, montée sur une section dite arrière dudit câble par rapport à l'âme dénudée dudit câble et audit ensemble de contrôle de champ et de protection extérieure (8, 5, 6), en étant tournée vers ce dernier et étant électriquement reliée audit déflecteur de champ (8), et **en ce que** ledit dispositif comporte un moyen (18) de continuité de protection extérieure, prévu entre ledit ensemble et ledit collecteur de courant de fuite et reçu intérieurement dans ladite gouttière.

2. Dispositif selon la revendication 1, **caractérisé en ce que** ledit collecteur de courant de fuite (10) a au moins sa paroi intérieure réalisée en matériau semi-conducteur ou à caractéristique électrique linéaire ou non.

3. Dispositif selon l'une des revendications 1 et 2, **caractérisé en ce qu'**il comporte une gaine semi-conductrice (16) s'étendant entre ledit ensemble de contrôle de champ électrique et de protection et ledit collecteur de courant de fuite (10) et sous leurs portions terminales en vis-à-vis.

4. Dispositif selon la revendication 3, **caractérisé en ce que** le moyen (18) de continuité de protection extérieure est un tube isolant, recouvrant au moins la partie de la dite gaine semi-conductrice entre ledit ensemble de contrôle de champ électrique et de protection et ledit collecteur de courant de fuite (10).

5. Dispositif selon la revendication 4, **caractérisé en ce que** ledit collecteur de courant (10) a sa paroi intérieure disposée entre ladite gaine semi-conductrice (16) et ledit tube isolant (18).

6. Dispositif selon l'une des revendications 3 à 5, **caractérisé en ce qu'**il comporte des moyens (20,24,25) de raccordement dudit écran conducteur (14) du câble à la terre, montés sous ladite gaine semi-conductrice (16) et saillants au-delà de ladite gaine semi-conductrice (16) sur ladite gaine extérieure du câble.

7. Dispositif selon l'une des revendications 1 à 6, **caractérisé en ce que** la paroi extérieure de ladite gouttière est évasée.

8. Dispositif selon l'une des revendications 1 à 7, **caractérisé en ce que** ledit collecteur de courant de fuite (10) fait partie intégrante dudit ensemble de contrôle de champ et de protection extérieure (8, 5, 6).

## Patentansprüche

1. Äußere Endvorrichtung für Energiekabel mittlerer, hoher oder sehr hoher Spannung, wobei das Kabel (1) eine zentrale leitende Seele (2) umfaßt, eine Isolierung (3) auf der Seele, eine halbleitende Abschirmung (4) auf der Isolierung, eine leitende Abschirmung (14) auf der halbleitenden Abschirmung und eine äußere Kabelschutzhülle (13), und mit einem sukzessiv abisolierten Endteil, wobei die Vorrichtung eine Anordnung zur Steuerung des elektrischen Feldes umfaßt und zum äußeren Schutz (8, 5, 6), welche zumindest ein isolierendes, röhrenförmiges Element umfaßt, daß auf der freigelegten Isolierung des Kabels montiert ist, und eine Deflektorhülse für das elektrische Feld (8), aufgenommen auf der halbleitenden, abisolierten Abschirmung des Kabels und einen Kollektor für Verluststrom (10), verbunden mit der Anordnung und geerdet, **dadurch gekennzeichnet, daß** der Stromkollektor (10) in der Form einer ringförmigen Rinne ausgebildet ist, montiert in einem hinteren Bereich des Kabels bezüglich der abisolierten Seele des Kabels und bezüglich der Anordnung zur Steuerung des Feldes und zum äußeren Schutz (8, 5, 6), wobei er zur letzteren gewandt ist, und elektrisch mit dem Felddeflektor (8) verbunden ist, und dadurch, daß die Vorrichtung Einrichtungen (18) für die Kontinuität des äußeren Schutzes umfaßt, vorgesehen zwischen der Anordnung und dem Kollektor für Verluststrom, und aufgenommen innerhalb der Rinne.

2. Vorrichtung nach Anspruch 1, **dadurch gekennzeichnet, daß** der Kollektor für Verlusstrom (10) zumindest bezüglich seiner Innenwand aus einem halbleitenden Material gemacht ist oder mit linearer oder nicht-linearer elektrischer Charakteristik.

3. Vorrichtung nach einem der Ansprüche 1 und 2, **dadurch gekennzeichnet, daß** sie eine halbleitende Hülle (16) umfaßt, die sich zwischen der Anordnung zur Steuerung des elektrischen Feldes und zum Schutz und dem Kollektor für Verluststrom (10) erstreckt und unter deren gegenüberliegende Endbereiche.

4. Vorrichtung nach Anspruch 3, **dadurch gekennzeichnet, daß** die Einrichtungen (18) für die Kontinuität des äußeren Schutzes eine isolierende Röhre sind, welche zumindest einen Teil der halbleitenden Hülle zwischen der Anordnung zur Steuerung des elektrischen Feldes und zum Schutz und dem Kollektor für Verluststrom (10) umgibt.

5. Vorrichtung nach Anspruch 4, **dadurch gekennzeichnet, daß** der Stromkollektor (10) seine Innenwand zwischen der halbleitenden Hülle (16) und der isolierenden Röhre (18) angeordnet hat.

6. Vorrichtung nach einem der Ansprüche 3 bis 5, **dadurch gekennzeichnet, daß** sie Einrichtungen (20, 24, 25) zur Verbindung der leitenden Abschirmung (14) des Kabels mit der Erde umfaßt, montiert unter der halbleitenden Abschirmung (16) und überstehend über die halbleitende Hülle (16) auf der äußeren Kabelschutzhülle.

7. Vorrichtung nach einem der Ansprüche 1 bis 6, **dadurch gekennzeichnet, daß** die Außenwand der Rinne sich öffnet.

8. Vorrichtung nach einem der Ansprüche 1 bis 7, **dadurch gekennzeichnet, daß** der Kollektor für den Verluststrom (10) einen integralen Teil der Anordnung zur Steuerung des Feldes und zum äußeren Schutz (8, 5, 6) bildet.

## Claims

1. An outer termination device for a power cable of medium, high, or very high voltage, said cable (1) comprising a central conductive core (2), insulation (3) on the core, a semiconductive shield (4) on the insulation, a conductive shield (14) on the semiconductive shield, and an outer protective sheath (13), and having an end portion that is bared in stepped manner, the device comprising a field-control and outer-protection assembly (8, 5, 6) for controlling electric field and for providing outer protection, which assembly comprises at least one tubular insulating element mounted on the bared insulation of the cable, and a deflector sleeve (8) for deflecting electric field received on the bared semiconductive shield of said cable, and the device further comprising a leakage-current collector (10) associated with said assembly and connected to ground, said device being **characterized in that** said current collector (10) is implemented in the form of an annular gutter mounted on a section of said cable said to be behind the bared core of said cable and said field-control and outer-protection assembly (8, 5, 6), the gutter facing said assembly and being electrically connected to said field deflector (8), and **in that** said device includes outer-protection continuity means (18) provided between said assembly and said leakage-current collector and received in said gutter.

2. A device according to claim 1, **characterized in that** said leakage-current collector (10) has at least its inner wall made of a semiconductive material optionally having a linear electrical characteristic.

3. A device according to claim 1 or 2, **characterized in that** it includes a semiconductive sheath (16) extending between said leakage-current collector (10) and said electric field-control and outer-protection assembly, and under their facing end portions.

4. A device according to claim 3, **characterized in that** the outer-protection continuity means (18) is an insulating tube covering at least that portion of said semiconductive sheath which lies between said leakage-current collector (10) and said electric field-control and outer-protection assembly.

5. A device according to claim 4, **characterized in that** said current collector (10) has its inner wall disposed between said semiconductive sheath (16) and said insulating tube (18).

6. A device according to any one of claims 3 to 5, **characterized in that** it includes means (20, 24, 25) for connecting said conductive shield (14) of the cable to ground, which means are mounted under said semiconductive sheath (16) and projecting beyond said semiconductive sheath (16) over said outer sheath of the cable.

7. A device according to any one of claims 1 to 6, **characterized in that** the outer wall of said gutter flares.

8. A device according to any one of claims 1 to 7, **characterized in that** said leakage-current collector (10) is an integral part of said field-control and outer-protection assembly (8, 5, 6).
